# EUROPEAN PATENT SPECIFICATION

(11) **EP 0 413 833 B1**
(45) Date of publication and mention of the grant of the patent: **09.11.1994**
(21) Application number: 90904438.0
(22) Date of filing: 13.03.1990
(51) Int. Cl.: A46D 1/00, A46B 15/00, A46B 9/04

(54) **TOOTHBRUSH**
ZAHNBÜRSTE
BROSSE A DENTS

(30) Priority: 14.03.1989 JP 62867/89
(43) Date of publication of application: 27.02.1991
(73) Proprietor: SUNSTAR KABUSHIKI KAISHA, Takatsuki-shi Osaka-fu (JP); TORAY MONOFILAMENT COMPANY LIMITED, Okazaki-shi, Aichi 444 (JP)
(72) Inventor: IWAI, Tatsuaki, Osaka 569 (JP); EBISUDANI, Katsushi, Osaka 545 (JP); YOKOSUKA, Naomi, Osaka 574 (JP)
(74) Representative: Stoner, Gerard Patrick
(86) International application number: JP9000320
(87) International publication number: WO9010400

(56) References cited:
- EP-A- 0 182 523
- GB-A- 2 213 721
- JP-B- 51 506
- JP-B- 4 620 304
- JP-Y- 4 831 719
- JP-Y- 5 040 688
- WPI/L DERWENT ABSTRACTS, week 8343, 1983, accession no. 83-797950 [43], DerwentPublications Ltd, London, GB; & JP-A-58 156 074 (MITSUBISHI RAYON) 16-09-1983

## Description

### FIELD OF THE INVENTION

The present invention relates to a toothbrush the filament filling part of which is hardly contaminated with bacteria even using it for a long period of time.

### PRIOR ART

Since a toothbrush is used in the oral cavity, in general, it is produced in a sanitary condition by means of ultraviolet-light irradiation or the like to prevent it from bacterial contamination during its production steps. Then, usually, bacterial contamination is scarcely observed in a toothbrush until its package is unpacked.

However, it has been confirmed that a toothbrush, particularly, its filament implanted part is contaminated with bacteria in the oral cavity as well as in keeping environment, while brushing of teeth several times per day is continued. Further, it has also been found that the degree of contamination increases as increase in frequency of use [Hiroko Miura et al., "Studies on Bacterial Contamination of Toothbrush", Koku Eisei Kaishi (Journal of dental health) 38, 180-185, 1988; and M. Svanberg, "Contamination of Toothpaste and Toothbrush by Stretococcus mutans, Scand. J. Dent. Res., 86, 412-414, 1978].

Hitherto, as a method for controlling bacterial contamination of a toothbrush, it has been said that the desired method is to thoroughly wash a toothbrush with water after use and to keep it at a well-ventilated place. However, this is not readily realized because of housing environment in recent days, and a toothbrush is often kept in insanitary environment. On the other hand, as a more positive method, sometimes, a disinfection treatment such as disinfection by boiling, disinfection by a medicament, for example, alcohol or the like, disinfection by sunning, or the like is employed.

However, these disinfection treatments take time and, in addition, sometimes, they cause deterioration of physical properties of a materials for the handle or filament of a toothbrush. Therefore, they are rarely employed in practice.

Then, attempts have been made by imparting antibacterial properties to a material for the handle or filament itself to solve the above problem. WPI/L Derwent Abstract no. 83-797950 relates to a textile having an antibacterial coating Particularly, a filament part near the site of implantation in the handle is liable to be contaminated with bacteria because dirt is liable to retain there and such a part is difficult to dry. Therefore, various studies have been made to impart antibacterial properties to a material for the filament and, further, to maintain its activity even using it for a long period time [see Japanese Utility Model Kokoku Nos. 37-21003, 42-19047, 48-31719 and 50-40688 as well as Japanese Patent Kokoku Nos. 46-20304 and 48-27389].

Humphries (EP-A-0 182 523) disclosed toothbrush filaments coated or impregnated with an oral hygiene composition but this did not relate to toothbrush hygiene.

### PROBLEM TO BE SOLVED BY THE INVENTION

However, the above prior art methods have problems such as high cost due to complicated production steps, deterioration of physical properties of the filament itself, impracticably low antibacterial activity and the like, and most of them are impracticable. Among them, a method comprising applying a polymer solution containing a bactericide on a surface of filament during its production steps (Japanese Patent Kokoku No. 46-20304) has relatively high practicability. However, the bactericide is not in the form suitable for moderate slow release, its antibacterial property is still insufficient.

### MEANS FOR SOLVING THE PROBLEM

In order to obtain a toothbrush having excellent antibacterial property which is highly practicable from the viewpoints of productivity, physical properties and cost, the present inventors have studied intensively. As a result, it has been found that the above problem can be solved by coating a surface of a filament with a complex of a polymer having cat ion exchange capacity and cationic bactericide. Thus, the present invention had been completed.

The present invention provides a toothbrush comprising a plurality of brush filaments, the filaments being made of a material selected from nylon, polyester, polypropylene and polyvinylidene chloride, and each having a bactericidal coating,
characterised in that said bactericidal coating includes a complex of a bactericide with a polymer capable of cation exchange, wherein
the bactericide is selected from chlorhexidine, cetylpyridinium, benzalkonium and benzethonium,
the polymer is selected from polymers of vinyl chloride, vinylidene chloride, vinyl acetate, acrylic ester, acrylonitrile, styrene, ethylene or propylene, and copolymers thereof, and has sulphonic groups,
the bactericidal coating is 0.1 to 10µ thick.

A compound providing a hydrophilic substituent, for example, polyoxyethylene glycol, polyoxypropylene glycol or the like, may be added to the polymer used so that water can be used as a solvent for preparing a coating solution or suspension for covering a filament with the complex of the polymer and a cationic bactericide.

As the cationic bactericide, chlorhexidine is most preferred in view of its broad antibacterial spectrum and high safety.

The complex of the above polymer and bactericide can be prepared by dissolving or suspending these materials in a suitable solvent such as water, an alcohol, for example, methanol, ethanol or the like and, if desired, adding a suitable amount of a crosslinking agent such as a polyfunctional block isocyanate compound to react them. The ratio of the polymer to the bactericide is not specifically limited and varies depending upon the polymer and bactericide to be used. Usually, it is preferable to use 1 to 100 parts by weight of the bactericide per 100 parts by weight of the polymer.

As the material for filament, known materials such as nylon, ployester, for example, polybutylene terephthalate, polypropylene, polyvinylidene chloride and the like can be used.

Covering of the filament can be carried out by applying a solution or suspension of the polymer and bactericide to the filament according to the conventional method and then drying it.

Implanting can also be carried out according to the conventional method.

Thus, in order to produce the toothbrush of the present invention, for example, a material for the filament is melt-extruded according to the conventional method and, after cooling, the extruded material is heat-stretched until its diameter becomes about 100 to 500 µ. A predetermined amount of a solution of the complex obtained by dissolving the above polymer and cationic bactericide in a suitable solvent is applied to the surface of the stretched filament material, and it was set and dried in a heat setting furnace to obtain a coating treated filament. Then, this is implanted in a suitable handle to produce the desired toothbrush.

In the present invention, thickness of the coating of the complex for imparting the desired antibacterial properties to the toothbrush is usually 0.1 to 10 µ, preferably 0.5 to 5 µ.

### EXAMPLE

The following Examples further illustrate the present invention in detail.

### Example 1

According to the conventional method, a predetermined amount of a mixture obtained by adding a trifunctional block isocyanate compound (40 parts by weight, trade name: Superfresh JB-7100) as a crosslinking agent to an aqueous emulsion of a complex of a copolymer (100 parts by weight) of three kinds of monomers, 2-acrylamide-2-methylpropane sulfonic acid, 2-hydroxyethyl acrylate and polyethylene glycol monomethyl ether methacrylate and chlorhexidine (35 parts by weight) was applied on a surface of a heat-stretched filament material (nylon 610) and it was set and dried in a heat setting furnace to produce a filament (diameter: 200 µ). Thickness of the coating was 1 to 4 µ(average about 2 µ).

The resulting filament was implanted according to the conventional method to produce the desired toothbrush.

Antibacterial activity tests of the resulting toothbrush were carried out as follows.

### (A) Antibacterial activity test (in vitro)

Antibacterial activity was tested by agar plate method according to AATCC test method 90.

The test conditions and test method are as follows.
(i) Test strain
Staphylococcus aureus AATCC 6538 was used.
(ii) Preparation of cell suspension
One loopful of the test strain was inoculated in 10 ml of a nutrient medium and was incubated at 37°C for 18 to 24 hours.
(iii) Composition of agar medium
pH was adjusted to 7.0 to 7.2.

| | |
|---|---|
| Peptone | 10 g |
| Beef extract | 5 g |
| Sodium chloride | 5 g |
| Distilled water | 1000 ml |
| Agar | 15 g |

(iv) Test method
The agar medium having the above composition was prepared, sterilized in an autoclave, and placed in an incubator maintained at 45°C. After the temperature became constant, 1 ml of the above-prepared cell suspension was added to 150 ml of the medium. 15 ml portions of the inoculated agar medium were distributed into sterilized Petri dishes and allowed to stand for 15 minutes. The filament sample cut to about 30 mm was gently placed on the surface of the agar medium, fixed and then incubated at 37°C for 18 to 24 hours. As a control, the same test was carried out by using a filament having the same diameter without covering the complex coating.

As a result, an inhibition zone was clearly observed around the complex coated filament of the present invention, while no inhibition zone was observed in the control filament.

### (B) Antibacterial property test (in vivo)

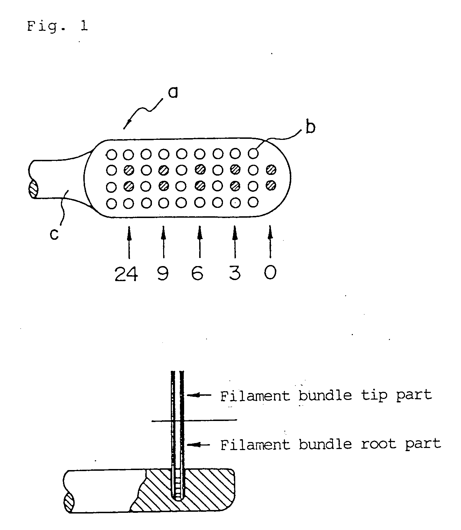

The test conditions and test method are as follows.
(i) Subjects
   The subjects were 10 volunteers aged 19 to 40 without serious systematic and oral diseases.
(ii) Toothbrush to be tested
   A toothbrush handle having 38 holes of 4 lines x 10 rows and 1.7 mm in hole diameter was implanted with the filaments of the present invention covered with the complex coating (hereinafter referred to as the antibacterial-treated filaments), or control filaments having the same diameter without covering the complex coating (hereinafter referred to as non-treated filaments) according to the conventional method, and then the filaments were cut to 10.5 mm in length to produce a toothbrush to be tested.
(iii) Test method
   The subjects were requested to brush their teeth twice a day for each three minutes, freely. Since there was a possibility that a test result was influenced by an ingredient of a toothpaste, the subjects were prohibited from using any toothpaste. After completion of brushing, the part of the toothbrush implanted with filaments was washed with running water for 10 seconds. In order to prevent bacterial contamination by the fingers, the subjects were prohibited from touching the implanted part by the fingers. After use, the toothbrush was dried and kept in a thermo-hygrostat maintained at a temperature of 20 °C and a relative humidity of 65% in a state that the toothbrush was set up with holding the implanted part upper until the next use. The test was repeatedly conducted under the above conditions with respect to the toothbrush implanted with antibacterial-treated filaments of the present invention and the non-treated toothbrush, respectively. The three test periods of 1, 8 and 20 days were employed.
(iv) Sampling of filament bundle
   Since the number of contaminative bacteria varies depending upon a drying time, two bundles of filaments of the test toothbrush were sampled with the elapse of drying time as shown in Fig. 1 and the number of contaminative bacteria was counted. The filament bundle sampled was cut into two parts, i.e., filament tip part and root part and the numbers of bacteria of both parts were counted, respectively.
(v) Count of bacteria
   The filament bundle sampled as described above was placed into a test tube and 10 ml of PBS was added thereto and strongly agitated. The resulting bacteria suspension was stepwisely diluted and 0.1 ml of a dilution was smeared on a blood agar medium according to the conventional method. After it was incubated at 35°C for 48 hours, the viable cell number was counted.

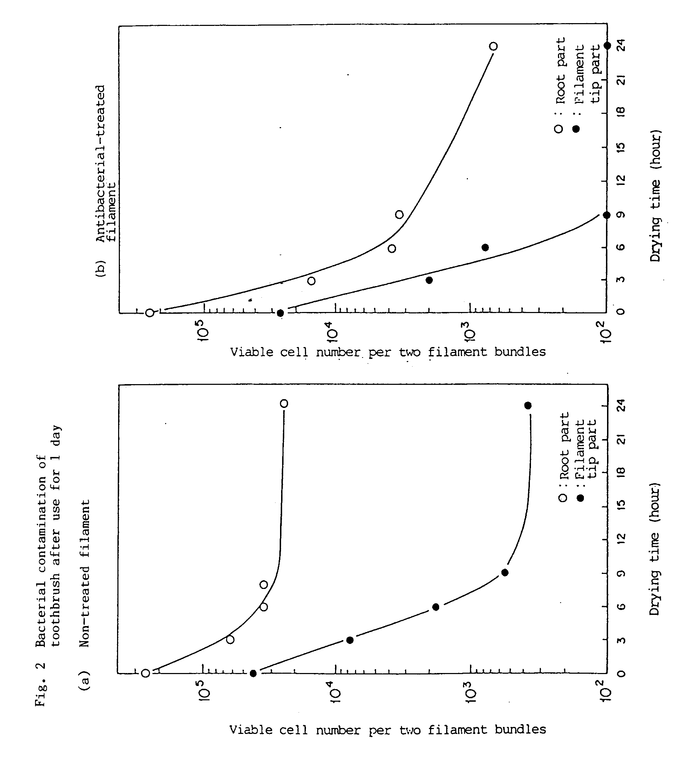

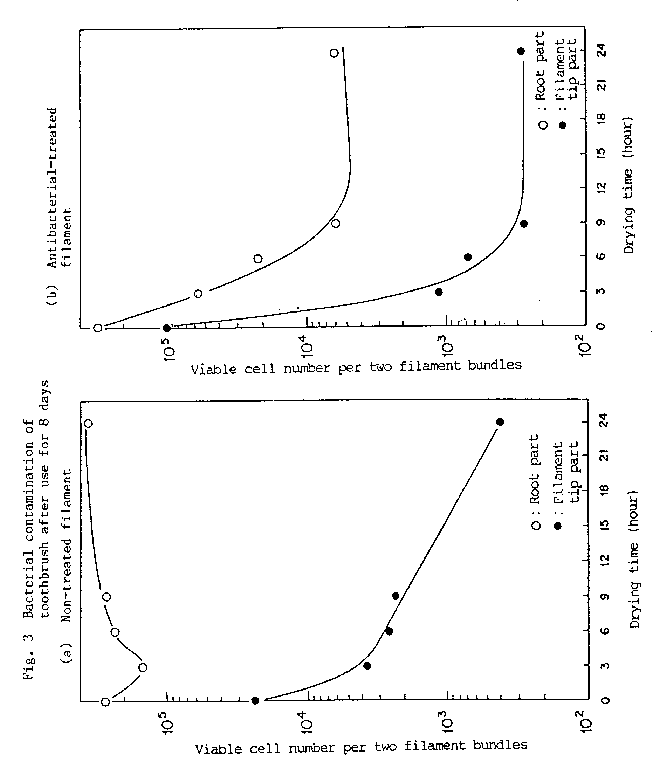

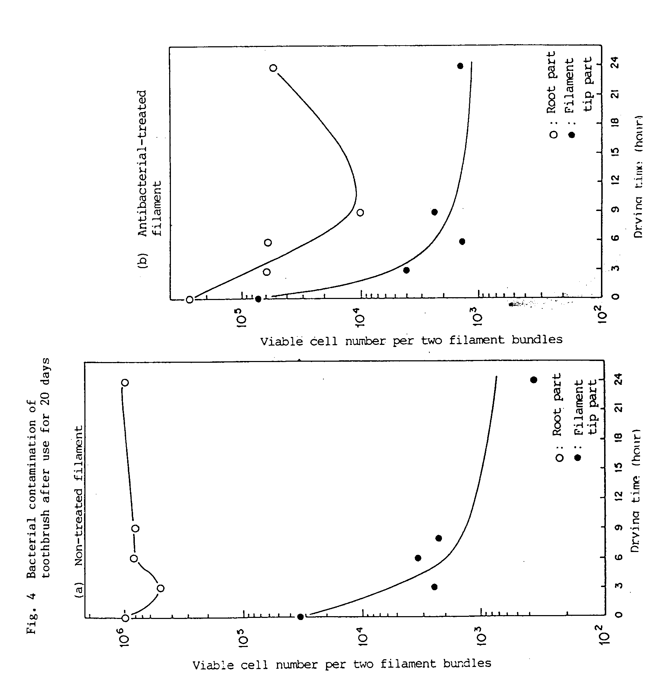

The results are shown in Fig. 2 to Fig. 4.

As is clear from Fig. 2 to Fig. 4, the degree of bacterial contamination of the antibacterial-treated filaments is lower than that of the non-treated filament and, in both filaments, the degree of bacterial contamination of the root part is higher than that of the tip part. Further, it has been found that the antibacterial-treated filaments show higher antibacterial activity at the root part where the higher degree of antibacterial contamination is observed.

### (C) Lasting of antibacterial activity

The test conditions and test method are as follows.
(i) Subjects
   The subjects were 5 volunteers aged 27 to 35 without serious systematic disease or oral disease.
(ii) Toothbrush to be tested
   The toothbrush handle having 38 holes of 4 lines x 10 rows and 1.7 mm in hole diameter was implanted with the antibacterial-treated filaments of the present invention according to the conventional method and the filaments were cut to 10.5 mm in length to produce a toothbrush to be tested.
(iii) Test method
   The subjects were requested to brush their teeth three times a day, freely. Further, they were not prohibited from using a toothpaste. A method for keeping the toothbrush was not limited.
(iv) Sampling of filaments
   On 1, 7, 14, 21 and 28 days after starting the test, three filaments were drawn at random per one toothbrush as the test sample.
(v) Evaluation of antibacterial activity
   Evaluation was conducted out by agar plate method according to the above AATCC test method 90.

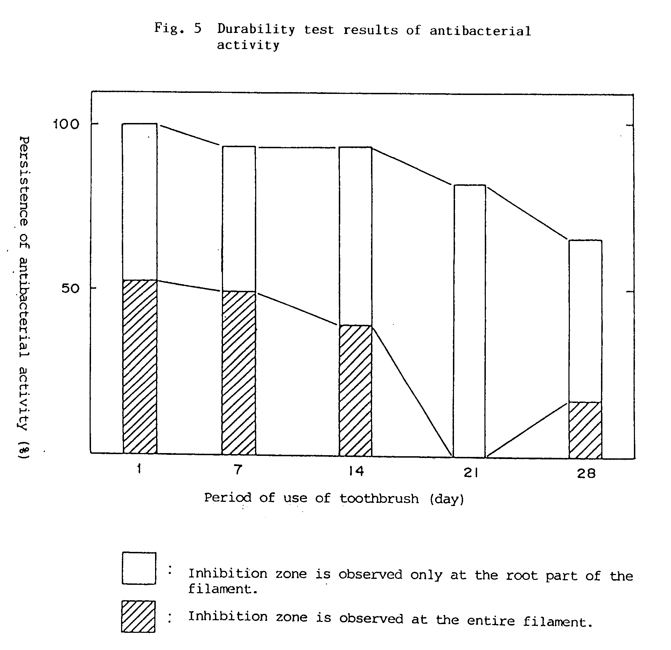

The results are shown in Fig. 5.

As is clear from Fig. 5, it has been found that the antibacterial-treated filaments of the present invention maintain antibacterial activity at the root part where bacterial contamination is particularly high even after using it for 28 days and the filament has sufficient durability in practice.

### (D) Physical property test of filament (Hardness test)

The test conditions and test method are as follows.
(i) Toothbrush to be tested
   The same toothbrush as that used in the antibacterial activity test (in vivo) was used. (Thirty toothbrushes were used, respectively.)
(ii) Test conditions
   In a thermo-hygrostat maintained at a temperature of 20°C ± 1°C and a relative humidity of 65 ± 5%, a buckling hardness was measured by perpendicularly compressing the filaments tip surface of the filling part of the toothbrush. Autogragh DSS-2000 manufactured by Shimadzu Seisakusho was used as the measuring equipment.

The results are shown in Table 1.

As is clear from Table 1, it has been found that there is no difference in physical properties between the antibacterial-treated filament of the present invention and that of the non-treated filament.

**Table 1**

| | Toothbrush implanted with antibacterial-treated filament | Toothbrush implanted with non-treated filament |
|---|---|---|
| Average value (kg) | 7.11 | 7.08 |
| Standard deviation (kg) | 0.45 | 0.48 |

### EFFECT OF THE INVENTION

As described above, according to the present invention, the antibacterial-treated filaments are used and, therefore, a toothbrush wherein filaments having such an excellent antibacterial activity that the activity can be maintained even for more than one month of use as well as having the same physical property as that of the conventional filaments are implanted can be mass-produced at low cost.

### BRIEF EXPLANATION OF DRAWINGS

Fig. 1 is a schematic plan view and side view of an implanted part of a toothbrush illustrating the sampling and measuring sites of the toothbrush in the antibacterial activity test.

Fig. 2 to Fig. 4 are graphs illustrating bacterial contamination of the toothbrush after using for 1, 8 and 20 days in the antibacterial activity test, respectively.

Fig. 5 is a graph illustrating the result of the durability test of antibacterial activity of the toothbrush of the present invention.

Symbols in the drawings mean as follows.

"a" is a toothbrush, "b" is a filament and "c" is a handle.

## Claims

1. A toothbrush comprising a plurality of brush filaments, the filaments being made of a material selected from nylon, polyester, polypropylene and polyvinylidene chloride, and each having a bactericidal coating,
characterised in that said bactericidal coating includes a complex of a bactericide with a polymer capable of cation exchange, wherein
the bactericide is selected from chlorhexidine, cetylpyridinium, benzalkonium and benzethonium,
the polymer is selected from polymers of vinyl chloride, vinylidene chloride, vinyl acetate, acrylic ester, acrylonitrile, styrene, ethylene or propylene, and copolymers thereof, and has sulphonic groups,
the bactericidal coating is 0.1 to 10µ thick.

2. A toothbrush according to claim 1, wherein said bactericidal coating includes a cross-linking agent.

3. A toothbrush according to claim 2 in which the cross-linking agent is a trifunctional block isocyanate compound and the polymer capable of cation exchange is a copolymer of 2-acrylamide-2-methylpropane sulfonic acid, 2-hydroxyethyl acrylate and polyethylene glycol monomethyl ether methacrylate.

4. A method of making a toothbrush, in which brush filaments of the brush, made from nylon, polyester, polypropylene or polyvinylidene chloride, are coated with a bactericide, characterised in that the bactericidal coating includes a complex of a bactericide with a polymer capable of cation exchange, wherein
the bactericide is selected from chlorhexidine, cetylpyridinium, benzalkonium and benzethonium,
the polymer is selected from polymers of vinyl chloride, vinylidene chloride, vinyl acetate, acrylic ester, acrylonitrile, styrene, ethylene or propylene, and copolymers thereof, and has sulphonic groups,
the bactericidal coating is 0.1 to 10µ thick.

5. A method according to claim 4 comprising first preparing the complex in a solution of the polymer and bactericide, optionally with a cross-linking agent.

6. A method according to claim 4 or claim 5, wherein the complex contains from 1 to 100 parts by weight of bactericide to 100 parts of polymer.

7. A method according to any one of claims 4 to 6, in which a solution or suspension of the coating material is coated onto the filament and then dried.

## Patentansprüche

1. Zahnbürste mit einer Vielzahl von Bürstenfilamenten bzw. -borsten, wobei die Filamente bzw. Borsten aus einem Material ausgewählt aus Nylon, Polyester, Polypropylen und Polyvinylidenchlorid hergestellt sind und jeweils einen bakteriziden Überzug haben, dadurch **gekennzeichnet**, daß der bakterizide Überzug einen Komplex eines Bakterizids mit einem zu einem Kationenaustausch fähigen Polymeren einschließt, wobei das Bakterizid aus Chlorhexidin, Cetylpyridinium, Benzalkonium und Benzethonium ausgewählt ist, das Polymere aus Polymeren von Vinylchlorid, Vinylidenchlorid, Vinylacetat, Acrylester, Acrylnitril, Styrol, Ethylen oder Propylen und Copolymeren davon ausgewählt ist, und Sulfongruppen aufweist, und wobei der bakterizide Überzug eine Dicke von 0,1 bis 10 µm hat.

2. Zahnbürste nach Anspruch 1, dadurch **gekennzeichnet**, daß der bakterizide Überzug ein Vernetzungsmittel einschließt.

3. Zahnbürste nach Anspruch 2, dadurch **gekennzeichnet**, daß das Vernetzungsmittel eine trifunktionelle Block-Isocyanatverbindung ist, und daß das zu einem Kationenaustausch fähige Polymere ein Copolymeres von 2-Acrylamid-2-methylpropansulfonsäure, 2-Hydroxyethylacrylat und polyethylenglycol-Monomethylethermethacrylat ist.

4. Verfahren zur Herstellung einer Zahnbürste, bei der Bürstenfilamente bzw. -borsten der Bürste aus Nylon, Polyester, Polypropylen oder Polyvinylidenchlorid mit einem Bakterizid beschichtet werden, dadurch **gekennzeichnet**, daß der bakterizide Überzug einen Komplex eines Bakterizids mit einem zu einem Kationenaustausch fähigen Polymeren einschließt, wobei das Bakterizid aus Chlorhexidin, Cetylpyridinium, Benzalkonium und Benzethonium ausgewählt ist, das Polymere aus Polymeren von Vinylchlorid, Vinylidenchlorid, Vinylacetat, Acrylester, Acrylnitril, Styrol, Ethylen oder Propylen und Copolymeren davon ausgewählt ist, und Sulfongruppen aufweist, und wobei der bakterizide Überzug eine Dicke von 0,1 bis 10 µm hat.

5. Verfahren nach Anspruch 4, dadurch **gekennzeichnet**, daß man zuerst den Komplex in einer Lösung des Polymeren und des Bakterizids, gegebenenfalls mit einem Vernetzungsmittel, herstellt.

6. Verfahren nach Anspruch 4 oder 5, dadurch **gekennzeichnet**, daß der Komplex 1 bis 100 Gewichtsteile Bakterizid pro 100 Teile Polymeres enthält.

7. Verfahren nach einem der Ansprüche 4 bis 6, **dadurch gekennzeichnet**, daß man eine Lösung oder Suspension des Beschichtungsmaterials auf das Filament bzw. die Borste aufschichtet und sodann trocknet.

## Revendications

1. Brosse à dents comprenant une pluralité de filaments de brosse, les filaments étant en un matériau sélectionné parmi le Nylon, le polyester, le polypropylène et le poly(chlorure de vinylidène) et ayant chacun un revêtement bactéricide, caractérisée en ce que ledit revêtement bactéricide comprend un complexe d'un bactéricide et d'un polymère susceptible d'échange de cations, dans lequel le bactéricide est sélectionné parmi la chlorhexidine, le cétylpyridinium, le benzalkonium et le benzéthonium, le polymère est sélectionné parmi les polymères de chlorure de vinyle, de chlorure de vinylidène, d'acétate de vinyle, d'éther acrylique, d'acrylonitrile, de styrène, d'éthylène ou de propylène ou leurs copolymères et présente des groupements sulfoniques, le revêtement bactérieide a une épaisseur de 0,1 à 10 µm.

2. Brosse à dents selon la revendication 1, dans laquelle ledit revêtement bactéricide comprend un agent réticulant.

3. Brosse à dents selon la revendication 2, dans laquelle l'agent réticulant est un composé isocyanate bloc trifonctionnel et le polymère susceptible d'échange de cations est un copolymère d'acide 2-acrylamide-2-méthylpropane-sulfonique, d'acrylate de 2-hydroxyéthyle et de méthacrylate d'éther monométhylique de polyéthylèneglycol.

4. Procédé de fabrication d'une brosse à dents, dans lequel les filaments de la brosse, en Nylon, polyester, polypropylène ou poly(chlorure de vinylidène) sont revêtus d'un bactéricide, caractérisé en ce que le revêtement bactéricide comprend un complexe d'un bactéricide et d'un polymère susceptible d'échange de cations, dans lequel le bactéricide est sélectionné parmi la chlorhexidine, le cétylpyridinium, le benzalkonium et le benzéthionium, le polymère est sélectionné parmi des polymères de chlorure de vinyle, de chlorure de vinylidène, d'acétate de vinyle, d'ester acrylique, d'acrylonitrile, de styrène, d'éthylène ou de propylène et leurs copolymères et comporte des groupements sulfoniques, le revêtement bactéricide a une épaisseur de 0,1 à 10 µm.

5. Procédé selon la revendication 4, comprenant tout d'abord la préparation du complexe dans une solution du polymère et du bactéricide, facultativement avec un agent réticulant.

6. Procédé selon la revendication 4 ou 5, dans lequel le complexe contient de 1 à 100 parties en poids de bactéricide pour 100 parties en poids de polymère.

7. Procédé selon l'une quelconque des revendications 4 à 6, dans lequel une solution ou suspension de la substance de revêtement est appliquée sur le filament, puis séchée.
